(19) **Europäisches Patentamt**
**European Patent Office**
**Office européen des brevets**

(11) **EP 2 413 416 A1**

(12) **EUROPEAN PATENT APPLICATION**
published in accordance with Art. 153(4) EPC

(43) Date of publication:
01.02.2012 Bulletin 2012/05

(51) Int Cl.:
*H01M 10/054* (2010.01) *H01M 2/16* (2006.01)
*H01M 4/587* (2010.01) *H01M 4/66* (2006.01)
*H01M 10/0566* (2010.01)

(21) Application number: 10756260.5

(22) Date of filing: 23.03.2010

(86) International application number:
**PCT/JP2010/055486**

(87) International publication number:
**WO 2010/110465 (30.09.2010 Gazette 2010/39)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: 25.03.2009 JP 2009073714

(71) Applicant: **Sumitomo Chemical Company, Limited Tokyo 104-8260 (JP)**

(72) Inventors:
• **OHMORI, Shigekazu**
 **Tsukuba-shi**
 **Ibaraki 305-0046 (JP)**
• **YAMAMOTO, Taketsugu**
 **Tsukuba-shi**
 **Ibaraki 305-0045 (JP)**

(74) Representative: **Brunetti, Fabrizio et al**
 **Cabinet Beau de Loménie**
 **158, rue de l'Université**
 **75340 Paris Cedex 07 (FR)**

(54) **SODIUM ION BATTERY**

(57) Disclosed is a sodium ion battery comprising a positive electrode, a negative electrode, and a sodium ion nonaqueous electrolyte, wherein the negative electrode comprises a negative electrode active material and a negative electrode current collector made of aluminum or aluminum alloy. Also disclosed is use of the negative electrode current collector made of aluminum or aluminum alloy as a negative electrode current collector of a sodium ion secondary battery.

**EP 2 413 416 A1**

**Description**

TECHNICAL FIELD

The present invention relates to a sodium ion battery.

BACKGROUND ART

A battery comprises a positive electrode, a negative electrode, and an electrolyte. In particular, as a chargeable and dischargeable secondary battery, a lithium ion secondary battery is known. In a lithium ion secondary battery, a negative electrode comprises a negative electrode active material and a negative electrode current collector, and copper is used as the negative electrode current collector. It is known that there is a problem that when a lithium ion secondary battery which uses copper as a negative electrode current collector is overdischarged, the copper of the negative electrode current collector melts, whereby the discharge capacity of the secondary battery rapidly decreases to shorten the cycle length of the secondary battery. On the other hand, as a means for solving this problem of a lithium ion secondary battery, JP 2002-42889 A discloses a lithium ion secondary battery which uses, as a negative electrode current collector, aluminum or aluminum alloy, and as a negative electrode active material, at least one negative electrode active material selected from the group consisting of metal, alloy, and a compound that are capable of being doped and dedoped with lithium ions.

DISCLOSURE OF THE INVENTION

It is difficult to prolong the overdischarging cycle length of a lithium ion secondary battery which uses aluminum or aluminum alloy as a negative electrode current collector and a carbonaceous material as a negative electrode active material, and the lithium ion secondary battery can not deal with use as a battery because of pulverization of the negative electrode current collector. Therefore, as in the prior art described above, the selection of a negative electrode active material of the battery is limited, thereby also limiting the design of the battery. An object of the present invention is to provide a battery that is capable of reducing of the overdischarging cycle length even when a carbonaceous material is used as a negative electrode active material, and that is obtainable at low cost.

The present invention provides the following means.

<1> A sodium ion battery comprising a positive electrode, a negative electrode and a sodium ion nonaqueous electrolyte, wherein the negative electrode comprises a negative electrode active material and a negative electrode current collector made of aluminum or aluminum alloy.

<2> The sodium ion battery according to <1>, wherein the negative electrode active material is a negative electrode active material capable of being doped and dedoped with sodium ions.

<3> The sodium ion battery according to <1>, wherein the negative electrode active material is a carbonaceous material capable of being doped and dedoped with sodium ions.

<4> The sodium ion battery according to <1>, wherein the positive electrode comprises a positive electrode active material capable of being doped and dedoped with sodium ions.

<5> The sodium ion battery according to <4>, wherein the positive electrode active material is a sodium inorganic compound.

<6> The sodium ion battery according to <1>, wherein the sodium ion nonaqueous electrolyte is liquid.

<7> The sodium ion battery according to <6>, comprising a separator.

<8> The battery according to <7>, wherein the separator is a laminated film which has a heat resistant porous layer and a porous film laminated to each other.

<9> Use of the negative electrode current collector made of aluminum or aluminum alloy as a negative electrode current collector of a sodium ion secondary battery.

MODE FOR CARRYING OUT THE INVENTION

The sodium ion battery of the present invention comprises a positive electrode, a negative electrode, and a sodium ion nonaqueous electrolyte, wherein the negative electrode comprises a negative electrode active material and a negative electrode current collector made of aluminum or aluminum alloy. In the battery, the potential at the negative electrode is lower than the potential at the positive electrode.

In the present invention, the negative electrode current collector is made of aluminum or aluminum alloy. The present invention is particularly useful as a sodium ion secondary battery. Examples of the shape of the negative electrode current collector include, for example, foil, flat plate, mesh, net, lath, perforated metal or emboss, or a combination of these shapes (for example, meshed flat plate). Irregularities may be formed on the surface of the negative electrode current collector by etching the surface. A battery case and a structural support of the battery that are made of aluminum or aluminum alloy may act as a negative electrode current collector. Preferable aluminum alloy contain at least one metal component selected from the group consisting of Mg, Mn, Cr, Zn, Si, Fe, and Ni.

In the present invention, the negative electrode comprises a negative electrode active material and a negative electrode current collector. Examples of the negative electrode active material include a sodium metal, a sodium alloy, or a carbonaceous material. Among these, a negative electrode active material capable of being doped and dedoped with sodium ions is preferable because the use thereof allows the battery of the present invention to be used as a secondary battery, i.e., sodium ion secondary battery. Examples of the negative electrode active material capable of being doped and dedoped with sodium ions include a carbonaceous material capable of being doped and dedoped with sodium ions, sodium metal, or sodium alloy. A negative electrode active material that is a carbonaceous material capable of being doped and dedoped with sodium ions is more preferable, whereby the potential difference between the positive electrode and the negative electrode of the sodium ion secondary battery can be increased, and even the reduction in overdischarging cycle length can be prevented. As the carbonaceous material, an amorphous carbonaceous material is preferable. Examples of the shape of the carbonaceous material include spherical, flaky, fibrous, and an aggregate of fine powder.

At the negative electrode, a negative electrode active material is generally supported on a negative electrode current collector. The negative electrode is obtained, for example, by supporting on a negative electrode current collector a negative electrode mixture comprising a negative electrode active material, a binding agent, optionally a conductive agent, and the like. More specific examples of the method include a method in which a negative electrode current collector is coated with or immersed in, by the doctor blade method or the like, a negative electrode mixture obtained by adding a solvent to a negative electrode active material, a binding agent, and the like, and then dried; a method in which a mixture obtained by adding a solvent to a negative electrode active material, a binding agent, and the like is kneaded, molded, and then dried, and the resulting sheet is bonded to the surface of a negative electrode current collector via, for example, a conductive adhesive, pressed, subjected to heat treatment, and then dried; and a method in which a mixture containing a negative electrode active material, a binding agent, a liquid lubricant, and the like is molded into sheet form on a negative electrode current collector, after which the liquid lubricant is removed, and the resulting molded material in the form of a sheet is stretched monoaxially or multiaxially. In cases where the negative electrode active material is sodium metal or sodium alloy, the sheet of sodium metal or sodium alloy may be bonded to the surface of a negative electrode current collector via, for example, a conductive adhesive to obtain a negative electrode. When a negative electrode is in the form of a sheet, the thickness of the negative electrode is generally about 5 $\mu$m to 500 $\mu$m.

Examples of the binding agent used in the above-described negative electrode include, for example, a polymer of fluorine compounds. Examples of the fluorine compound include fluorinated alkyl (carbon atoms: 1 to 18) (meth) acrylate, perfluoroalkyl (meth)acrylate [for example, perfluorododecyl (meth)acrylate, perfluoro n-octyl (meth)acrylate, and perfluoro n-butyl (meth)acrylate]; perfluoroalkyl substituted alkyl (meth)acrylate [for example, perfluorohexylethyl (meth)acrylate and perfluorooctylethyl (meth)acrylate]; perfluorooxyalkyl (meth)acrylate [for example, perfluorododecyloxyethyl (meth)acrylate and perfluorodecyloxyethyl (meth)acrylate]; fluorinated alkyl (carbon atoms: 1 to 18) crotonate; fluorinated alkyl (carbon atoms: 1 to 18) malate and fumarate; fluorinated alkyl (carbon atoms: 1 to 18) itaconate; fluorinated alkyl substituted olefin (carbon atoms: about 2 to 10; and fluorine atoms: about 1 to 17); perfluorohexyl ethylene, fluorinated olefins in which a fluorine atom(s) is bonded to a double-bonded carbon(s), having about 2 to 10 carbon atoms and about 1 to 20 fluorine atoms; tetrafluoroethylene; trifluoroethylene; vinylidene fluoride; and hexafluoropropylene.

Other examples of the binding agent include an addition polymer of a monomer comprising no fluorine atoms and comprising an ethylenic double bond. Examples of such a monomer include (cyclo)alkyl (carbon atoms: 1 to 22) (meth)acrylate [for example, methyl (meth)acrylate, ethyl (meth)acrylate, n-butyl (meth)acrylate, iso-butyl (meth)acrylate, cyclohexyl (meth)acrylate, 2-ethylhexyl (meth)acrylate, isodecyl (meth)acrylate, lauryl (meth)acrylate, and octadecyl (meth)acrylate]; aromatic ring-containing (meth)acrylate [for example, benzyl (meth)acrylate and phenylethyl (meth) acrylate]; mono(meth)acrylate of alkylene glycol or dialkylene glycol (carbon atoms of an alkylene group(s): 2 to 4) [for example, 2-hydroxyethyl (meth)acrylate, 2-hydroxypropyl (meth)acrylate, and diethylene glycol mono(meth)acrylate]; (poly)glycerin (degree of polymerization: 1 to 4) mono(meth)acrylate; (meth) acrylic acid ester monomers such as polyfunctional (meth)acrylate [for example, (poly)ethylene glycol (degree of polymerization: 1 to 100) di(meth)acrylate, (poly) propylene glycol (degree of polymerization: 1 to 100) di(meth)acrylate, 2,2-bis(4-hydroxyethyl phenyl)propane di(meth) acrylate, and trimethylolpropane tri(meth)acrylate]; (meth)acrylamide monomers such as (meth)acrylamide and (meth) acrylamide derivatives [for example, N-methylol (meth)acrylamide and diacetone acrylamide]; cyano group-containing monomers such as (meth)acrylonitrile, 2-cyanoethyl (meth)acrylate, and 2-cyanoethyl acrylamide; styrene monomers such as styrene and styrene derivatives having 7 to 18 carbon atoms [for example, $\alpha$-methylstyrene, vinyl toluene, p-hydroxystyrene, and divinylbenzene]; diene monomers such as alkadiene having 4 to 12 carbon atoms [for example, butadiene, isoprene, and chloroprene]; alkenyl ester monomers such as carboxylic acid (carbon atoms: 2 to 12) vinyl ester [for example, vinyl acetate, vinyl propionate, vinyl butyrate, and vinyl octanoate] and carboxylic acid (carbon atoms: 2 to 12) (meth)allyl ester [for example, (meth)allyl acetate, (meth)allyl propionate, and (meth)allyl octanoate]; epoxy group-containing monomers such as glycidyl (meth)acrylate and (meth)allyl glycidyl ether; monoolefins such as a monoolefin having 2 to 12 carbon atoms [for example, ethylene, propylene, 1-butene, 1-octene, and 1-dodecene]; monomers containing a chlorine atom(s), a bromine atom(s), or an iodine atom(s), monomers containing a halogen atom(s) other than fluorine such as vinyl chloride and vinylidene chloride; (meth)acrylic acids such as acrylic acid and methacryl acid; and conjugated double bond-containing monomers such as butadiene and isoprene.

The addition polymer may also be a copolymer such as an ethylene-vinyl acetate copolymer, styrene-butadiene copolymer, or ethylene-propylene copolymer. The carboxylic acid vinyl ester polymer may be partially or completely saponificated as in polyvinyl alcohol. The binding agent may be a copolymer of a fluorine compound and a monomer comprising no fluorine atoms and comprising an ethylenic double bond.

Other examples of the binding agent include polysaccharides such as starch, methylcellulose, carboxymethylcellulose, hydroxymethylcellulose, hydroxyethylcellulose, hydroxypropylcellulose, carboxy-methylhydroxyethylcellulose, and nitrocellulose, and derivatives thereof; phenol resins; melamine resins; polyurethane resins; urea resins; polyamide resins; polyimide resins; polyamide-imide resins; petroleum pitch; and coal pitch.

Two or more of the above-described binding agents may be used. For example, when the binding agent thickens, a plasticizer may be used to facilitate the coating on a negative electrode current collector.

Examples of the solvent used in the above-described negative electrode include aprotic polar solvents such as N-methyl-2-pyrrolidone; alcohols such as isopropyl alcohol, ethyl alcohol, or methyl alcohol; ethers such as propylene glycol dimethyl ether; and ketones such as acetone, methyl ethyl ketone, or methyl isobutyl ketone.

The conductive adhesive is, for example, a mixture of a conductive agent and a binding agent. A suitable conductive adhesive is a mixture of carbon black and polyvinyl alcohol because it requires no solvent, can be easily prepared, and has excellent storage stability.

While the content of the components in the above-described negative electrode mixture may be appropriately determined, the content of the binding agent is generally about 0.5 parts by weight to 30 parts by weight, preferably about 2 parts by weight to 30 parts by weight, relative to 100 parts by weight of the negative electrode active material, and the content of the solvent is generally about 10 parts by weight to 500 parts by weight, preferably about 10 parts by weight to 200 parts by weight, relative to 100 parts by weight of the negative electrode active material. The conductive agent, which is generally not necessary, may be added in an amount of not more than 20 parts by weight relative to 100 parts by weight of the negative electrode active material for the purpose of increasing the conductivity of the negative electrode mixture. Examples of the conductive agent include carbonaceous materials such as natural graphite, artificial graphite, cokes, and carbon black. In the negative electrode, the carbonaceous material can also serve as a conductive agent.

In cases where the positive electrode active material in the positive electrode is a sodium inorganic compound described below, examples of the negative electrode active material capable of being doped and dedoped with sodium ions also include chalcogen compounds such as sulfide. Examples of the sulfide include $TiS_2$, $ZrS_2$, $VS_2$, $V_2S_5$, $TaS_2$, $FeS_2$, $NiS_2$, and compounds represented by $M^6S_2$ (wherein $M^6$ is at least one transition metal element.).

The positive electrode generally comprises a positive electrode active material and a positive electrode current collector, and optionally further comprises a binding agent, a conductive agent, and the like. At the positive electrode, the positive electrode active material is generally supported on the positive electrode current collector. The positive electrode is obtained, for example, by supporting on a positive electrode current collector a positive electrode mixture comprising a positive electrode active material, a binding agent, a conductive agent, and the like. More specific examples of the method include a method in which a positive electrode current collector is coated with or immersed in, by the doctor blade method or the like, a positive electrode mixture obtained by adding a solvent to a positive electrode active material, a binding agent, a conductive agent, and the like, and then dried; a method in which a mixture obtained by adding a solvent to a positive electrode active material, a binding agent, a conductive agent, and the like is kneaded, molded, and then dried, and the resulting sheet is bonded to the surface of a positive electrode current collector via, for example, a conductive adhesive, pressed, subjected to heat treatment, and then dried; and a method in which a mixture composed of a positive electrode active material, a binding agent, a conductive agent, a liquid lubricant, and the like is molded into sheet form on a positive electrode current collector, after which the liquid lubricant is removed, and the resulting molded material in the form of a sheet is stretched monoaxially or multiaxially. When a positive electrode is in the form of a sheet, the thickness of the positive electrode is generally about 5 $\mu$m to 500 $\mu$m.

Because the positive electrode comprises a positive electrode active material capable of being doped and dedoped with sodium ions, and the negative electrode comprises a negative electrode active material capable of being doped and dedoped with sodium ions, the battery of the present invention is capable of acting as a sodium ion secondary battery, which is preferable.

The positive electrode active material capable of being doped and dedoped with sodium ions is preferably a sodium inorganic compound. Examples of the sodium inorganic compound capable of being doped and dedoped with sodium ions include the following compounds: oxides represented by $NaM^1{}_aO_2$, such as $NaFeO_2$, $NaMnO_2$, $NaNiO_2$, and $NaCoO_2$; oxides represented by $Na_{0.44}Mn_{1-a}M^1{}_aO_2$; oxides represented by $Na_{0.7}Mn_{1-a}M^1{}_aO_{2.05}$, wherein $M^1$ is at least one transition metal element, $0 \le a < 1$; oxides represented by $Na_bM^2{}_cSi_{12}O_{30}$, wherein $M^2$ is at least one transition metal element, $2 \le b \le 6$, $2 \le c \le 5$, such as $Na_6Fe_2Si_{12}O_{30}$ and $Na_2Fe_5Si_{12}O_{30}$; oxides represented by $Na_dM^3{}_eSi_6O_{18}$, wherein $M^3$ is at least one transition metal element, $3 \le d \le 6$, $1 \le e \le 2$, such as $Na_2Fe_2Si_6O_{18}$ and $Na_2MnFeSi_6O_{18}$; oxides represented by $Na_fM^4{}_gSi_2O_6$, wherein $M^4$ is at least one element selected from the group consisting of transition metal elements, Mg, and Al, $1 \le f \le 2$, $1 \le 1\, g \le 2$, such as $Na_2FeSiO_6$; phosphoric acid salts such as $NaFePO_4$ and $Na_3Fe_2(PO_4)_3$; boric acid salts such as $NaFeBO_4$ and $Na_3Fe_2(BO_4)_3$; and fluorides represented by $Na_hM^5F_6$, wherein $M^5$ is at least one transition metal element, $2 \le h \le 3$, such as $Na_3FeF_6$ and $Na_2MnF_6$.

In the present invention, among the above-described sodium inorganic compounds, Fe-containing compounds can be preferably used. The use of Fe-containing compounds is preferable also because the battery can be composed of low-cost materials due to abundant resources.

Examples of the conductive agent used in the positive electrode include carbonaceous materials such as natural graphite, artificial graphite, cokes, and carbon black.

Examples of the positive electrode current collector used in the positive electrode include: metal such as nickel, aluminum, titanium, copper, gold, silver, platinum, aluminum alloy, or stainless steel; substances formed by plasma spraying or arc spraying, for example, carbonaceous materials, activated carbon fiber, nickel, aluminum, zinc, copper, tin, lead, or alloys thereof; and conductive films obtained by dispersing a conductive agent in a resin such as rubber or styrene-ethylenebutylene-styrene copolymer (SEBS). Particularly preferable is aluminum, nickel, or stainless steel, among which aluminum is especially preferable in that it can be easily processed into a thin film and is inexpensive. Examples of the shape of the positive electrode current collector include foil, flat plate, mesh, net, lath, perforated metal or emboss, or a combination of these shapes (for example, meshed flat plate). Irregularities may be formed on the surface of the positive electrode current collector by etching the surface.

When using as a positive electrode active material a positive electrode active material incapable of being dedoped with sodium ions, the battery of the present invention acts as a primary battery. Examples of such a positive electrode active material include fluorocarbon, manganese dioxide, thionyl chloride, iron sulfide, and copper oxide. In the case of the primary battery, for example, sodium metal and sodium alloy can be used as a negative electrode active material.

In the present invention, the sodium ion nonaqueous electrolyte may be in any form, such as liquid, solid, or gelatinous. From the viewpoint of output capability of the battery, it is preferably liquid. The sodium ion nonaqueous electrolyte exhibits a sodium ion conductivity when discharging or when charging and discharging.

Examples of the liquid sodium ion nonaqueous electrolyte, i.e., sodium ion nonaqueous electrolyte solution include those obtained by dissolving a sodium ion electrolyte in an organic solvent. Examples of the sodium ion electrolyte include $NaClO_4$, $NaPF_6$, $NaAsF_6$, $NaSbF_6$, $NaBF_4$, $NaCF_3SO_3$, $NaN(SO_2CF_3)_2$, lower aliphatic carboxylic sodium salts, and $NaAlCl_4$, two or more of which may be used. Among them, at least one selected from the group consisting of $NaPF_6$, $NaAsF_6$, $NaSbF_6$, $NaBF_4$, $NaCF_3SO_3$, and $NaN(SO_2CF_3)_2$ which comprise fluorine is preferably used.

Examples of the organic solvent that can be used in the sodium ion nonaqueous electrolyte solution include: carbonates such as propylene carbonate, ethylene carbonate, dimethyl carbonate, diethyl carbonate, ethyl methyl carbonate, isopropyl methyl carbonate, vinylene carbonate, 4-trifluoromethyl-1,3-dioxolane-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, and $\gamma$-butyrolactone; nitriles such as acetonitrile and butyronitrile; amides such as N.N-dimethylformamide and N,N-dimethylacetamide; carbamates such as 3-methyl-2-oxazolidone; sulfur-containing compounds such as sulfolane, dimethyl sulfoxide, and 1,3-propane sultone; or those obtained by introducing additional fluorine substituents into the above-described organic solvents. As an organic solvent, two or more thereof may be used in combination.

The concentration of the sodium ion electrolyte in the sodium ion nonaqueous electrolyte solution is generally about not less than 0.1 mol/L and not more than 2 mol/L, preferably about not less than 0.3 mol/L and not more than 1.5 mol/L.

In the present invention, a gelatinous sodium ion nonaqueous electrolyte obtained by holding the above-described sodium ion nonaqueous electrolyte solution to a macromolecular compound can also be used as a sodium ion nonaqueous electrolyte.

A solid sodium ion nonaqueous electrolyte, i.e., solid electrolyte can also be used as a sodium ion nonaqueous electrolyte. Examples of the solid electrolyte that can be used include an organic solid electrolyte obtained by holding the above-described sodium ion electrolyte to, for example, a polyethylene oxide-based macromolecular compound or a macromolecular compound comprising at least one of polyorganosiloxane chains or polyoxyalkylene chains. Inorganic solid electrolytes such as $Na_2S-SiS_2$, $Na_2S-GeS_2$, $NaTi_2(PO_4)_3$, $NaFe_2(PO_4)_3$, $Na_2(SO_4)_3$, $Fe_2(SO_4)_2(PO_4)$, $Fe_2(MoO_4)_3$, $\beta$-alumina, $\beta''$-alumina, and NASICON may also be used. The use of these solid electrolytes can further improve the safety of the battery. In the battery of the present invention, when using a solid or gelatinous sodium ion nonaqueous electrolyte, these can serve as a separator described below.

In cases where the sodium ion nonaqueous electrolyte is particularly liquid, the battery of the present invention preferably comprises a separator. As a separator, materials having the form such as a porous film, a nonwoven fabric, or a woven fabric can be used. Examples of the above-described material of the separator include polyolefin resins such as polyethylene and polypropylene, fluororesins, and nitrogen-containing aromatic polymers. A monolayer or laminated separator using two or more of these materials may also be used. Examples of the separator include the separator described, for example, in JP 2000-30686 A or JP 10-324758 A. As long as the mechanical strength is maintained, the thickness of the separator is preferably as thin as possible because if it is thin, the volume energy density of the battery will increase, and the internal resistance will decrease. Generally, the thickness of the separator is preferably about 5 μm to 200 μm, more preferably about 5 μm to 40 μm.

The separator preferably comprises a porous film containing a thermoplastic resin. The separator is positioned between the positive electrode and the negative electrode, and preferably has a function to prevent excessive current flow by blocking the current (to shutdown) when an abnormal current flows through the battery because of, for example, a short circuit between the positive electrode and the negative electrode. The shutdown is performed, when above the normal service temperature, by clogging the micropores of the porous film in the separator. Preferably, even if the temperature in the battery rises to a high temperature after the shutdown, the shutdown state is maintained without causing the film rupture due to the temperature. Examples of such separators include a porous film comprising a heat resistant material, such as a laminated film which has a heat resistant porous layer(s) and a porous film laminated to each other, preferably, a laminated film which has a heat resistant porous layer(s) containing a heat resistant resin and a porous film containing a thermoplastic resin laminated to each other. By using as a separator such a porous film comprising a heat resistant material, the thermal film rupture of the secondary battery of the present invention can be further prevented. In the laminated film, the heat resistant porous layer may be laminated on both sides of the porous film.

The laminated film which has a heat resistant porous layer(s) and a porous film laminated to each other, which is preferable as a separator, will now be described. The thickness of the separator is generally not less than 5 μm and not more than 40 μm, preferably not more than 20 μm. When the thickness the heat resistant porous layer is assumed to be A (μm) and the thickness of the porous film is assumed to be B (μm), the value A/B is preferably not less than 0.1 and not more than 1. Further, in view of ion permeability, the separator preferably has an air permeability according to the Gurley method of 50 sec/100 cc to 300 sec/100 cc, more preferably 50 sec/100 cc to 200 sec/100 cc. The porosity of the separator is generally 30% by volume to 80% by volume, preferably 40% by volume to 70% by volume.

In the laminated film, the heat resistant porous layer is a layer having a higher heat-resistance than that of the porous film. The heat resistant porous layer preferably contains a heat resistant resin. For further increasing the ion permeability, the heat resistant porous layer preferably has the thickness as thin as not less than 1 μm and not more than 10 μm, more preferably not less than 1 μm and not more than 5 μm, and especially preferably not less than 1 μm and not more than 4 μm.

The heat resistant porous layer has micropores, the size (diameter) of which is generally not more than 3 μm, preferably not more than 1 μm. Further, the heat resistant porous layer can contain the filler described below. The heat resistant porous layer may also be formed from inorganic powder.

Examples of the heat resistant resin contained in the heat resistant porous layer include polyamide, polyimide, polyamide-imide, polycarbonate, polyacetal, polysulfone, polyphenylene sulfide, polyether ketone, aromatic polyester, polyether sulfone, and polyetherimide; in view of further increasing the heat resistance, polyamide, polyimide, polyamide-imide, polyether sulfone, and polyetherimide are preferable, and polyamide, polyimide, and polyamide-imide are more preferable. Still more preferably, the heat resistant resin is nitrogen-containing aromatic polymers such as aromatic polyamide (para-oriented aromatic polyamide, meta-oriented aromatic polyamide), aromatic polyimide, and aromatic polyamide-imide, among which aromatic polyamide is preferable, and para-oriented aromatic polyamide (which hereinafter may be referred to as "para-aramid") is especially preferable. Examples of the heat resistant resin also include poly-4-methylpentene-1 and cyclic olefin polymers. By using these heat resistant resins, heat resistance can be increased; i.e., thermal film rupture temperature can be raised.

The thermal film rupture temperature, which is dependent on the type of the heat resistant resin, is selected and used according to the context and purpose of use. Generally, the thermal film rupture temperature is 160°C or more. When using as a heat resistant resin the above-described nitrogen-containing aromatic polymer, poly-9-methylpentene-1, and cyclic olefin polymers, the thermal film rupture temperature can be controlled at about 400°C, about 250°C, and about 300°C, respectively. When the heat resistant porous layer is formed from inorganic powder, the thermal film rupture temperature can be controlled, for example, at 500°C or more.

The above-described para-aramid is obtained by the condensation polymerization of para-oriented aromatic diamines with para-oriented aromatic dicarboxylic acid halides, and consists essentially of the repeating units which are bonded to each other through an amide bond at para position or orientation positions equivalent thereto (for example, orientation positions from which the para-aramid extends in the opposite direction coaxially or parallel to each other as in 4,4'-biphenylene, 1,5-naphthalene, and 2,6-naphthalene) of the aromatic ring. Examples of the para-aramid include para-aramid having a para-oriented structure or structure equivalent to the para-oriented structure, specifically, poly(p-phenylene terephthalamide), poly(p-benzamide), poly(4,4'-benzanilide terephthalamide), poly(p-phenylene-4,4'-biphenylenedicarboxamide), poly(p-phenylene-2,6-naphthalenedicarboxamide), poly(2-chloro-p-phenylene terephthalamide), and p-phenylene terephthalamide/2,6-dichloro-p-phenylene terephthalamide copolymer.

As the above-described aromatic polyimide, preferable is wholly aromatic polyimide formed by the condensation polymerization of aromatic dianhydrides and aromatic diamines. Specific examples of the dianhydride include pyromellitic dianhydride, 3,3',4,4'-diphenylsulfone tetracarboxylic dianhydride, 3,3',4,4'-benzophenone tetracarboxylic dianhydride, 2,2'-bis(3,4-dicarboxyphenyl)hexafluoropropane, and 3,3',4,4'-biphenyltetracarboxylic dianhydride. Examples of the diamine include oxydianiline, p-phenylenediamine, benzophenonediamine, 3,3'-methylenedianiline, 3,3'-diamino benzophenone, 3,3'-diaminodiphenylsulfone, and 1,5'-naphthalenediamine. Polyimide soluble in a solvent can be suitably used. Examples of such polyimide include, for example, the polyimide which is a polycondensate of 3,3',4,4'-diphenylsulfone tetracarboxylic dianhydride and aromatic diamines.

Examples of the above-described aromatic polyamide-imide include those which are obtained by the condensation polymerization using aromatic dicarboxylic acids and aromatic diisocyanates, and those which are obtained by the condensation polymerization using aromatic dianhydrides and aromatic diisocyanates. Specific examples of the aromatic dicarboxylic acid include isophthalic acid and terephthalic acid. Specific examples of the aromatic dianhydride include trimellitic anhydride. Specific examples of the aromatic diisocyanate include 4,4'-diphenylmethane diisocyanate, 2,4-tolylene diisocyanate, 2,6-tolylene diisocyanate, orthotolylane diisocyanate, and m-xylene diisocyanate.

When the heat resistant porous layer contains a heat resistant resin, the heat resistant porous layer may contain at least one filler. The filler that may be contained in the heat resistant porous layer may be one selected from organic powder, inorganic powder, or a mixture thereof. The particles which constitute the filler preferably have an average particle size of not less than 0.01 $\mu$m and not more than 1 $\mu$m. Examples of the shape of the particles which constitute the filler include substantially spherical, platy, columnar, acicular, whisker-like, and fibrous, and particles of any shape can be used. The particles which constitute the filler are preferably substantially spherical particles because they easily form uniform pores. Examples of the substantially spherical particle include the particle having a particle aspect ratio (mayor axis of particle / minor axis of particle) of not less than 1 and not more than 1.5. The aspect ratio of the particle can be measured from electron micrographs.

Examples of the organic powder as a filler include styrene, vinyl ketone, acrylonitrile, methyl methacrylate, ethyl methacrylate, glycidyl methacrylate, glycidyl acrylate, methyl acrylate, or copolymers of two or more thereof; fluorine resins such as polytetrafluoroethylene, tetrafluoroethylene-hexafluoropropylene copolymer, tetrafluoroethylene-ethylene copolymer, and polyvinylidene fluoride; melamine resins; urea resins; polyolefins; and the powder composed of organic matter such as polymethacrylate. The organic powder may be used alone or in combination of two or more thereof. Among these organic powders, polytetrafluoroethylene powder is preferable in view of chemical stability.

Examples of the inorganic powder as a filler include the powder made of inorganic matter such as metal oxides, metal nitrides, metal carbides, metal hydroxides, carbonic acid salts, and sulfuric acid salts, among which the powder made of the inorganic matter with low conductivity is preferably used. Specific examples include the powder made of, for example, alumina, silica, titanium dioxide, barium sulfate, or calcium carbonate. The inorganic powder may be used alone or in combination of two or more thereof. Among these inorganic powders, alumina powder is preferable in view of chemical stability. More preferably, all the particles which constitute the filler are alumina particles; still more preferably, all the particles which constitute the filler are alumina particles, and part or all of them are substantially spherical alumina particles. Incidentally, when the heat resistant porous layer is formed from inorganic powder, the above-exemplified inorganic powder may be used, and it may be used in combination with a binder, if required.

The filler content when the heat resistant porous layer contains a heat resistant resin depends on specific gravity of the material of the filler. For example, in cases where all the particles which constitute the filler are alumina particles, when the total weight of the heat resistant porous layer is taken as 100, the weight of the filler is generally not less than 5 and not more than 95, preferably not less than 20 and not more than 95, and more preferably not less than 30 and not more than 90. These ranges can be appropriately set depending on specific gravity of the material of the filler.

In the laminated film, the porous film preferably has micropores to shutdown. In this case, the porous film contains a thermoplastic resin. The thickness of the porous film is generally 3 $\mu$m to 30 $\mu$m, more preferably 3 $\mu$m to 25 $\mu$m. The porous film, similarly to the above-described heat resistant porous layer, has micropores, the size of which is generally not more than 3 $\mu$m, preferably not more than 1 $\mu$m. The porosity of the porous film is generally 30 by volume to 80% by volume, preferably 40 by volume to 70% by volume. In the nonaqueous electrolytic secondary battery, when above the normal service temperature, the porous film can clog the micropores by the softening of its component, thermoplastic resin.

Examples of the thermoplastic resin contained in the porous film include those which soften at 80°C to 180°C, and those which do not dissolve in a sodium ion nonaqueous electrolyte solution in the battery may be selected. Specific examples of the thermoplastic resin include polyolefin resins such as polyethylene and polypropylene; and thermoplastic polyurethane resins, and a mixture of two or more thereof may be used. For softening and shutdown at lower temperatures, the thermoplastic resin preferably contains polyethylene. Examples of the polyethylene include, specifically, polyethylenes such as low-density polyethylene, high-density polyethylene, and linear polyethylene, as well as ultra-high molecular weight polyethylene having a molecular weight of 1,000,000 or more. To further increase the pin puncture strength of the porous film, the thermoplastic resin preferably contains at least ultra-high molecular weight polyethylene. From the viewpoint of production of the porous film, the thermoplastic resin may preferably contain a wax made of a polyolefin of low molecular weight (weight average molecular weight of not more than 10,000).

Examples of the porous film comprising a heat resistant material different from that of the above-described laminated film include a porous film made of a heat resistant resin and/or inorganic powder and a porous film in which a heat resistant resin and/or inorganic powder are dispersed in a film made of a thermoplastic resin such as a polyolefin resin or a thermoplastic polyurethane resin. Examples of the heat resistant resin and inorganic powder include those mentioned above.

When using a sodium ion nonaqueous electrolyte solution, the sodium ion battery can be produced by laminating or laminating/winding a positive electrode, a separator, a negative electrode, and a separator in the order mentioned to obtain an electrode group, storing the electrode group in a battery case such as a battery can, and impregnating the electrode group with the nonaqueous electrolyte solution. When using a solid or gelatinous sodium ion electrolyte, the sodium ion battery can be produced by, for example, arranging the electrolyte such that a positive electrode and a negative electrode are insulated from each other, laminating them, winding them, if required, to obtain an electrode group, and storing the electrode group in a battery case such as a battery can.

Examples of the shape of the electrode group include such a shape that the cross section taken perpendicular to the winding axis of the electrode group is circular, oval, rectangular, or round-cornered rectangular. Examples of the shape of the battery include shapes such as paper-type, coin-type, cylindrical, and prismatic.

EXAMPLES

The present invention will now be described in more detail by way of examples.

Production Example 1 (Production of Positive Electrode)

(1) Synthesis of Positive Electrode Active Material

Sodium carbonate (Na$_2$CO$_3$: produced by Wako Pure Chemical Industries, Ltd.: purity 99.8%) and manganese (IV) oxide (MnO$_2$: produced by Kojundo Chemical Lab. Co., Ltd.: purity 99.9%) were weighed such that the molar ratio of Na:Mn was 0.7:1.0, and mixed for 4 hours with a dry ball mill to obtain a mixture of the metal compounds. The mixture of the metal compounds obtained was placed into an alumina boat, calcined at 800°C in an air atmosphere for 2 hours using an electric furnace to obtain a sodium inorganic compound (positive electrode active material 1).

(2) Production of Positive Electrode

The positive electrode active material 1, acetylene black (produced by DENKI KAGAKU KOGYO KABUSHIKI KAISHA) as a conductive material, and PVdF (produced by KUREHA CORPORATION, Polyvinylidene DiFluoride) as a binding agent were individually weighed to give a composition of the positive electrode active material 1:conductive material:binding agent = 85:10:5 (weight ratio). Subsequently, the positive electrode active material 1 and the acetylene black were mixed using an agate mortar, and to this mixture, an appropriate amount of N-methyl-2-pyrrolidone (NMP: produced by Tokyo Chemical Industry Co., Ltd.) and further PVdF were added. The resulting mixture was dispersively mixed to obtain a paste of the positive electrode mixture. Using an applicator, the paste was applied on a 40-$\mu$m-thick aluminum foil, which is a positive electrode current collector, to the thickness of 100 $\mu$m, dried, roll-pressed to obtain a positive electrode sheet 1. The positive electrode sheet 1 was punched with an electrode punching machine to a diameter of 1.5 cm to obtain a positive electrode 1.

Production Example 2 (Production of Sodium Ion Nonaqueous Electrolyte)

Propylene carbonate (which hereinafter may be referred to as PC; C$_4$H$_6$O$_3$: produced by Kishida Chemical Co., Ltd.: purity 99.5%) was used as an organic solvent in the sodium ion nonaqueous electrolyte solution. Sodium perchlorate (NaClO$_4$: produced by Wako Pure Chemical Industries, Ltd.) as a sodium ion electrolyte was weighed in an amount of 1 mol (122 g) per 1 L of PC and added. The resulting mixture was stirred at room temperature for 6 hours to obtain a sodium ion nonaqueous electrolyte solution 1. The preparation was performed in a glove box under an argon atmosphere.

Example 1 (Production of Sodium Ion Battery)

(1) Production of Negative Electrode

A commercially available carbonaceous material (ICB-0510, produced by Nippon Carbon Co., Ltd.) which is an amorphous carbonaceous material was used as a negative electrode active material. The negative electrode active material and polyvinylidene difluoride (PVdF) as a binding agent were weighed to give a composition of negative electrode active material:binding agent = 95:5 (weight ratio). After dissolving the binding agent in NMP, the negative electrode active material was added thereto, and the resulting mixture was dispersively mixed to obtain a paste of the negative electrode mixture. Using an applicator, the paste was applied on a 40-$\mu$m-thick aluminum foil, which is a negative electrode current collector, to the thickness of 100 $\mu$m, dried, roll-pressed to obtain a negative electrode sheet 1. The negative electrode sheet 1 was punched with an electrode punching machine to a diameter of 1.5 cm to obtain a negative electrode 1.

(2) Production of Sodium Ion Battery

A polypropylene porous film (thickness: 20 $\mu$m) as a separator, the positive electrode 1 of Production Example 1, the sodium ion nonaqueous electrolyte solution 1 of Production Example 2, the above-described negative electrode 1, and a coin cell (produced by Hohsen Corp.) were used to produce a sodium ion battery 1. Specifically, into a hollow of the lower part of the coin cell (produced by Hohsen Corp.), the positive electrode 1 of Production Example 1 was placed with the aluminum foil side down (with the positive electrode active material side up), and the separator was placed thereon, followed by injection of 0.5 mL of the sodium ion nonaqueous electrolyte solution 1 with a pipette. Further, the negative electrode 1 and an inner lid were placed on the topside of the separator with the aluminum foil side of the negative electrode 1 up (with the negative electrode active material side down). They were capped at the upper part via a gasket and caulked with a caulker to prepare a sodium ion battery 1. The assembly of the test battery was performed in a glove box under an argon atmosphere.

(3) Evaluation of Sodium Ion Battery

Using the sodium ion battery 1 obtained as described above, a constant current charge-discharge test were performed under the following charge-discharge conditions. Ten cycles of charge and discharge could be observed, indicating that the sodium ion battery 1 can be satisfactorily used as a secondary battery.
Charge and Discharge Conditions: In charging, CC (Constant Current) charging was performed to 4.0 V at 0.1 C rate (the rate at which charging is completed in 10 hours). In discharging, CC discharging was performed at the same rate as the charging rate and cutoff was made at a voltage of 1.5 V. From the next cycle onward, charge and discharge were performed at the same rate as the above charging rate. As in the first cycle, charging voltage was 4.0 V, and cutoff was made at a discharging voltage of 1.5 V.

Comparative Example 1

(1) Electrolyte

LiPF$_6$ was used as a lithium ion electrolyte, and this electrolyte was dissolved in an organic solvent such that LiPF$_6$/organic solvent was 1 mol/L, which organic solvent being a mixture of ethylene carbonate (EC), dimethyl carbonate (DMC), and ethyl methyl carbonate (EMC) in a volume ratio of 15:10:75 (= EC:DMC:EMC), to produce a lithium ion nonaqueous electrolyte solution 1.

(2) Lithium Ion Battery

A positive electrode 2 was produced in the same manner as in Production Example 1 using LiCoO$_2$ (Cell seed C-10N (produced by Nippon Chemical Industrial Co., Ltd.); BET specific surface area: 0.2 m$^2$/g) as a positive electrode active material. The lithium ion battery was assembled in the same manner as in Example 1 except that the positive electrode 2 and the above-described lithium ion nonaqueous electrolyte solution 1 were used instead of the positive electrode 1 and the sodium ion nonaqueous electrolyte solution 1, respectively, and the constant current charge-discharge test was performed under the same charge-discharge conditions as in Example 1. However, the lithium ion battery could not be charged and discharged, indicating that it cannot be used as a secondary battery.

Production Example 3 (Production of Laminated Film)

(1) Production of Coating Fluid for Heat Resistant Porous Layer

In 4200 g of NMP, 272.7 g of calcium chloride was dissolved, and then 132.9 g of p-phenylenediamine was added to achieve complete dissolution. To the solution obtained, 243.3 g of terephthalic acid dichloride was slowly added for polymerization to obtain a para-aramid. The solution was further diluted with NMP to obtain a para-aramid solution (A) having a concentration of 2.0% by weight. To 100 g of the para-aramid solution obtained, 2 g of alumina powder (a) (ALUMINA C produced by Nippon Aerosil Co., Ltd.; average particle size: 0.02 $\mu$m) and 2 g of alumina powder (b) (Sumicorundum AA03 produced by Sumitomo Chemical Co., Ltd.; average particle size: 0.3 $\mu$m), totaling 4 g, were added as a filler and mixed. The resulting mixture was treated with a nanomizer three times, further filtered through a wire net of 1000 mesh, and defoamed under reduced pressure to produce a slurry coating fluid (B). The weight of the alumina powder (filler) relative to the total weight of the para-aramid and alumina powder is 67% by weight.

(2) Production and Evaluation of Laminated Film

As a porous film, a polyethylene porous film (film thickness: 12 $\mu$m; air permeability: 140 sec/100 cc; average pore size: 0.1 $\mu$m; and porosity: 50%) was used. The polyethylene porous film was fixed on a 100-$\mu$m-thick PET film, and the slurry coating fluid for a heat resistant porous layer was applied on the porous film using a bar coater produced by TESTER SANGYO CO., LTD. The applied porous film on the PET film, while being integrated, was immersed in water, a poor solvent, and a para-aramid porous layer (heat resistant porous layer) was deposited, after which the solvent was dried and the PET film was peeled off to obtain a laminated film which has the heat resistant porous layer and the porous film laminated to each other. The laminated film had the thickness of 16 $\mu$m, and the para-aramid porous layer (heat resistant porous layer) had a thickness of 4 $\mu$m. The laminated film had an air permeability of 180 sec/100 cc and a porosity of 50%. The cross section of the heat resistant porous layer in the laminated film was observed by scanning electron microscope (SEM), and it was shown that the laminated film had relatively small micropores of about 0.03 $\mu$m to 0.06 $\mu$m and relatively large micropores of about 0.1 $\mu$m to 1 $\mu$m. Evaluation of the laminated film was performed as described in (A) to (C) below.

(A) Measurement of Thickness

The thickness of the laminated film and the thickness of the porous film were measured in accordance with JIS K7130-1992. As the thickness of the heat resistant porous layer, a value obtained by subtracting the thickness of the porous film from the thickness of the laminated film was used.

(B) Measurement of Air Permeability According to the Gurley Method

The air permeability of the laminated film was measured according to JIS P8117 by a digitally timed Gurley densometer manufactured by Yasuda Seiki seisakusho LTD.

(C) Porosity

A sample of the laminated film obtained was cut into a square with sides of 10 cm, and the weight W (g) and thickness D (cm) were measured. The weight $W_i$ (g) of each layer in the sample was determined, and the volume of each layer was determined from $M_i$ and the true density $\rho_i$ (g/cm$^3$) of the material of each layer. The porosity (% by volume) was determined by the following equation:

$$\text{Porosity (\% by volume)} = 100 \times [1 - (W_1/\rho_1 + W_2/\rho_2 + \ldots + W_n/\rho_n) / (10 \times 10 \times D)]$$

In the above-described Examples, a sodium ion secondary battery that can further prevent thermal film rupture can be obtained by using as a separator the laminated film obtained in the Production Example.

INDUSTRIAL APPLICABILITY

The present invention, even when using a carbonaceous material as a negative electrode active material, can prevent the reduction in overdischarging cycle length of the battery, and is useful particularly as a secondary battery. In addition, a wide variety of batteries can be designed without severe limitations on the selection of a negative electrode active material. This can increase the potential difference between the positive electrode and the negative electrode, thereby allowing the design of a battery with a high energy density. Moreover, the sodium ion battery of the present invention, compared to the lithium ion secondary battery, is a battery obtainable at a lower cost because it can be composed of lower-cost materials due to the more abundant resources. Thus the present invention is extremely practical.

**Claims**

1. A sodium ion battery comprising a positive electrode, a negative electrode and a sodium ion nonaqueous electrolyte, wherein the negative electrode comprises a negative electrode active material and a negative electrode current collector made of aluminum or aluminum alloy.

2. The sodium ion battery according to claim 1, wherein the negative electrode active material is a negative electrode active material capable of being doped and dedoped with sodium ions.

3. The sodium ion battery according to claim 1, wherein the negative electrode active material is a carbonaceous material capable of being doped and dedoped with sodium ions.

4. The sodium ion battery according to claim 1, wherein the positive electrode comprises a positive electrode active material capable of being doped and dedoped with sodium ions.

5. The sodium ion battery according to claim 4, wherein the positive electrode active material is a sodium inorganic compound.

6. The sodium ion battery according to claim 1, wherein the sodium ion nonaqueous electrolyte is liquid.

7. The sodium ion battery according to claim 6, comprising a separator.

8. The sodium ion battery according to claim 7, wherein the separator is a laminated film which has a heat resistant porous layer and a porous film laminated to each other.

9. Use of the negative electrode current collector made of aluminum or aluminum alloy as a negative electrode current collector of a sodium ion secondary battery.

<table>
<tr><td colspan="2" align="center">**INTERNATIONAL SEARCH REPORT**</td><td colspan="2">International application No.<br>PCT/JP2010/055486</td></tr>
</table>

| A. CLASSIFICATION OF SUBJECT MATTER |
|---|
| *H01M10/054*(2010.01)i, *H01M2/16*(2006.01)i, *H01M4/587*(2010.01)i, *H01M4/66* (2006.01)i, *H01M10/0566*(2010.01)i |
| According to International Patent Classification (IPC) or to both national classification and IPC |

| B. FIELDS SEARCHED |
|---|
| Minimum documentation searched (classification system followed by classification symbols)<br>H01M10/054, H01M2/16, H01M4/587, H01M4/66, H01M10/0566 |
| Documentation searched other than minimum documentation to the extent that such documents are included in the fields searched<br>   Jitsuyo Shinan Koho      1922-1996   Jitsuyo Shinan Toroku Koho   1996-2010<br>   Kokai Jitsuyo Shinan Koho   1971-2010   Toroku Jitsuyo Shinan Koho   1994-2010 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| P,A | WO 2009/057727 A1 (Sumitomo Chemical Co., Ltd.),<br>07 May 2009 (07.05.2009),<br>entire text<br>& JP 2009-135074 A     & JP 2009-132593 A | 1-9 |
| A | JP 2004-533706 A (Valence Technology, Inc.),<br>04 November 2004 (04.11.2004),<br>entire text<br>& JP 2009-266821 A    & WO 2002/097907 A2<br>& CA 2442257 A | 1-9 |
| A | WO 2008/061174 A2 (VALENCE TECHNOLOGY, INC.),<br>22 May 2008 (22.05.2008),<br>entire text<br>& US 2008/0261113 A1 | 1-9 |

☒ Further documents are listed in the continuation of Box C.     ☐ See patent family annex.

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>   14 June, 2010 (14.06.10) | Date of mailing of the international search report<br>   22 June, 2010 (22.06.10) |
|---|---|
| Name and mailing address of the ISA/<br>   Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/055486

| C (Continuation). DOCUMENTS CONSIDERED TO BE RELEVANT | | |
|---|---|---|
| Category* | Citation of document, with indication, where appropriate, of the relevant passages | Relevant to claim No. |
| A | WO 2009/008558 A1 (Sumitomo Chemical Co., Ltd.), 15 January 2009 (15.01.2009), entire text & JP 2009-38023 A | 1-9 |
| A | JP 10-324758 A (Sumitomo Chemical Co., Ltd.), 08 December 1998 (08.12.1998), entire text & JP 2007-277580 A | 8 |
| A | JP 2000-030686 A (Sumitomo Chemical Co., Ltd.), 28 January 2000 (28.01.2000), entire text & US 6447958 B1 & DE 19918856 A | 8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002042889 A
- JP 2000030686 A
- JP 10324758 A